**Europäisches Patentamt**

**European Patent Office**

**Office européen des brevets**

(19)

(11) Veröffentlichungsnummer : **0 168 452**
**B1**

(12)

# EUROPÄISCHE PATENTSCHRIFT

(45) Veröffentlichungstag der Patentschrift :
02.12.87

(51) Int. Cl.⁴ : **F 16 L 55/16**, F 16 L 21/00//
E03F3/04

(21) Anmeldenummer : 85900663.7

(22) Anmeldetag : 16.01.85

(86) Internationale Anmeldenummer :
PCT/EP 85/00011

(87) Internationale Veröffentlichungsnummer :
WO/8503338 (01.08.85 Gazette 85/17)

(54) MANSCHETTE ZUM DICHTEN DER STÖSSE VON ROHREN.

(30) Priorität : 20.01.84 DE 3402325

(43) Veröffentlichungstag der Anmeldung :
22.01.86 Patentblatt 86/04

(45) Bekanntmachung des Hinweises auf die Patenterteilung : 02.12.87 Patentblatt 87/49

(84) Benannte Vertragsstaaten :
AT BE CH DE FR GB LI NL SE

(56) Entgegenhaltungen :
GB-A- 1 200 225
GB-A- 2 038 976
US-A- 3 558 164
US-A- 4 426 106

(73) Patentinhaber : STEINBURG AG
Aeulestrasse 47
FL-9490 Vaduz (LI)

(72) Erfinder : KOLAR, Robert
Aeulestrasse 47
FL-9490 Vaduz (LI)

(74) Vertreter : Jander, Dieter, Dipl.-Ing. et al
Dipl.-Ing. Dieter Jander Dr.-Ing. Manfred Böning
Patentanwälte Kurfürstendamm 66
D-1000 Berlin 15 (DE)

**Beschreibung**

Die Erfindung bezieht sich auf eine Manschette zum Dichten der Stöße von Rohren, die den beiden Rohrenden innen jeweils mit mehreren, aus einem Stück mit der übrigen Manschette bestehenden Ringstegen anliegt, aus elastischem Material besteht und von Spannringen auf ihrer Innenseite im Bereich der Ringstege nach außen gedrückt wird.

Vorzugsweise sind die Rohre begehbar.

Bei bekannten Manschetten dieser Art (GB-A-20 38 976 ; GB-A-12 00 225) bildet im unbelasteten Zustand die Kontur der Ringe im Querschnitt eine stetige, von der Rohrwand zu ihrer Mitte hin weggebogene Kurve. Legt man diese Manschette lose in die Rohre (um sie anschliessend mittels der Spannringe gegen die Rohre zu pressen), dann muß die obere Hälfte der Manschette gehalten werden, da sie anderenfalls nach unten fallen würde. Das gilt selbst dann, wenn man sie vorher mit der Hand gegen die Rohrwandung gedrückt hat.

Der Erfindung liegt die Aufgabe zugrunde, die eingangs erwähnte Manschette derart auszubilden, daß sie nach losem Einlegen in die Rohre und Andrücken gegen die Rohrwandung per Hand ihre Sollage beibehält.

Diese Aufgabe wird erfindungsgemäß dadurch gelöst, daß im unbelasteten Zustand die Kontur der Ringstege im Querschnitt zwei Wölbungen zur Rohrwandung hin bildet.

Wird eine solche Manschette in die Rohre gelegt und mit der Hand gegen die Rohrwandungen gedrückt, so bleibt sie stehen. Das ist darauf zurückzuführen, daß sich die Ringstege an der Rohrwandung (die durch Schleifen im Dichtungsbereich geglättet worden ist) saugnapfartig halten : Die beiden Wölbungen lassen beim Andrükken etwas Luft aus dem Raum zwischen ihnen austreten. Wird anschliessend die Manschette losgelassen, so entsteht in diesem Raum ein gewisser Unterdruck, der die Manschette festhält. Im bekannten Fall ist das anders : Bei diesem ist das Luftpolster zwischen Rohrwandung und Ring größer als im erfindungsgemässen Fall. Es ist somit mit einer weichen bzw. elastischen Feder zu vergleichen. Das hat zur Folge, daß sich die Ringstege bei kraftänderungen, z. B. dann, wenn sie nach einem anfänglichen Andrücken sich selbst überlassen bleiben, leichter bewegen können als im erfindungsgemässen Fall. Derartige Bewegungen aber führen zu Verschiebungen, was zur Folge hat, daß Luft in den Hohlraum eindrigen kann. Der dort zunächst herrschende Unterdruck wird also abgebaut, und die Manschette wird infolgedessen nicht gehalten.

Als weiterer Vorteil kommt hinzu, daß die erfindungsgemässe Manschette besser dichtet als die bekannte : Beim Andrücken mittels der Spannringe drücken sich die vorgewölbten Bereiche der Stege in die feinsten Rillen und Vertiefungen der Rohrwandung, und zwar tiefer und auf größerem Bereich als im bekannten Fall die entsprechenden Stegbereiche. Der Grund hierfür besteht im folgenden : Im Gegensatz zu der bekannten Lösung können die Bereiche der Ringstege, die zu allererst zur Anlage mit der Rohrwandung kommen, nicht seitlich ausweichen.

Eine Weiterentwicklung der Erfindung besteht darin, daß die Ringstege im unbelasteten Zustand einen solchen Abstand voneinander haben, daß sie sich im belasteten Zustand nicht berühren. Dadurch wird die Dichtwirkung weiter verbessert.

Erfindungsgemäß ist es ferner zweckmässig, wenn auf beiden Seiten der mit Ringstegen mit zwei Wölbungen versehenen Bereich je ein Ringsteg angeordnet ist, dessen der Rohrwandung zugewandte Fläche im Querschnitt eine Kurve bildet, die eine Gerade oder in etwa eine Gerade ist.

Vorteilhaft ist es, wenn diese Kurve im unbelasteten Zustand der Manschette, ausgehend von ihrem den übrigen Ringstegen zugewandten Ende, schräg von der Rohrwandung weg verläuft.

Besonders zweckmässig ist es allerdings, wenn diese Kurve im unbelasteten Zustand der Manschette, ausgehend von ihrem den übrigen Ringstegen zugewandten Ende, schräg zur Rohrwandung hin verläuft.

Auch ist es vorteilhaft, wenn im unbelasteten Zustand der Manschette die Flanken der äußeren Ringstege parallel und schräg zur Rohrwandung und zu den übrigen Ringstegen hin verlaufen.

Eine Weiterentwicklung der Erfindung besteht darin, daß die den übrigen Ringstegen zugewandten Flanken der äußeren Ringstegen in der Höhe der Kanten des Spannringes angeordnet sind. Wird der Spannring an die Manschette gepreßt und die Manschette infolgedessen gegen die Rohrwandung gedrückt, dann verschwenken sich die äußeren Ringstege etwas derart, daß sich ihre Dichtflächen satt an die Rohrwandung andrükken.

Sodann wird vorgeschlagen, daß sich die Ringstege mit zwei Wölbungen zu ihren Sockelpartien hin konisch verbreitern. Die zur Rohrwandung hin gewölbten Dichtflächen werden infolgedessen bei zunehmendem Anpreßdruck senkrecht gegen die Rohrwandung gedrückt, und schräg wirkende Kräfte, die zu einem seitlichen Ausweichen der Dichtflächen führen könnten, treten nicht auf.

Schließlich ist es zweckmässig, daß die äußeren Ringstege im unbelasteten Zustand einen solchen Abstand von den Nachbarstegen haben, daß sich diese und jene im belasteten Zustand nicht berühren.

Weitere Einzelheiten der Erfindung ergeben sich aus der Zeichnung. Darin zeigen :

Figur 1 einen Teil einer erfindungsgemässen Manschette im Schnitt und

Figur 2 das linke Ende der in Figur 1 dargestellten Manschette in einer abgewandelten Ausführungsform.

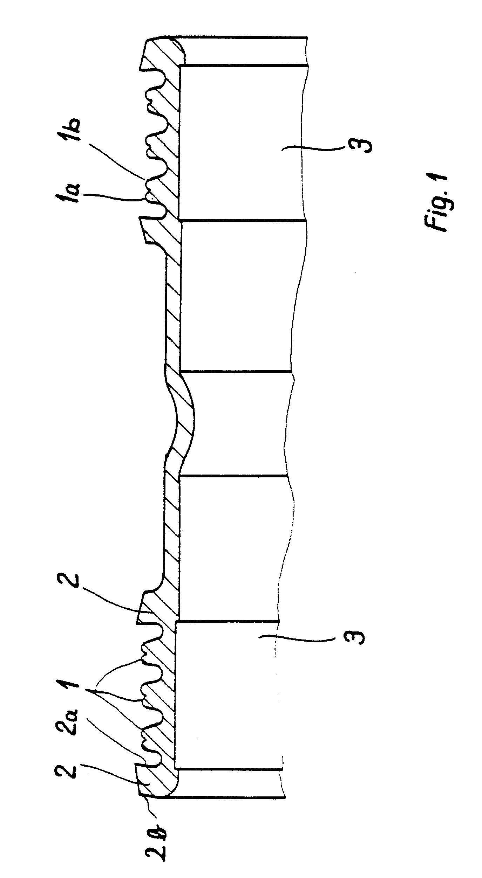

Die in Figur 1 veranschaulichte Manschette weist auf jeder Seite drei Ringstege 1 auf. Diese bilden jeweils zwei Wölbungen 1a, 1b. Auf den beiden Seiten der Ringstege 1 befindet sich je ein weiterer Ringsteg 2, dessen Flanke 2a höher als seine Flanke 2b ist. Mit 3 sind flache Nuten auf der Innenseite der Manschette bezeichnet, in denen nicht dargestellte Spannringe ruhen, welche die Ringstege 1, 2 nach außen gegen die Innenwände nicht dargestellter Rohrenden drücken.

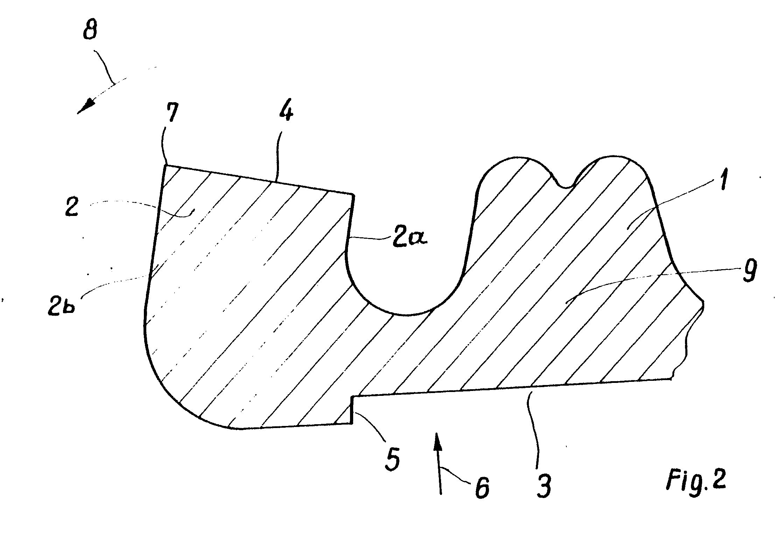

Figur 2 zeigt das linke Ende des in Figur 1 veranschaulichten Manschettenstückes in einer anderen Ausführungsform. Die Flanken 2a, 2b sind parallel und verlaufen schräg. Außerdem verläuft die Fläche 4 entgegengesetzt schräg zu der entsprechenden Fläche der Ausführungsform der Figur 1. Die Kante 5 der Nut 3, in der der Spannring ruht, liegt etwa unterhalb (bezogen auf Figur 2) der Flanke 2a. Wird der Spannring angezogen derart, daß auf die Manschette eine Kraft gemäß Pfeil 6 ausgeübt wird, dann verschwenkt sich die Kante 7 etwa gemäß Pfeil 8, was zur Folge hat, daß nach entsprechendem Anpreßdruck die Fläche 4 satt der Rohrwandung anliegt.

Der Steg 2 auf der anderen Seite der Stege 1 ist entsprechend ausgebildet, d. h. auch bei ihm verläuft die Dichtfläche schräg von der Rohrwand weg zu dem benachbarten Ringsteg hin.

Die Ringstege 1 verbreitern sich zu ihren Sockelpartien 9.

## Patentansprüche

1. Manschette zum Dichten der Stöße von Rohren, die den beiden Rohrenden innen jeweils mit mehreren, aus einem Stück mit der übrigen Manschette bestehenden Ringstegen (1) anliegt, aus elastischem Material besteht und von Spannringen auf ihrer Innenseite im Bereich der Ringstege (1) nach außen gedrückt wird, dadurch gekennzeichnet, daß im unbelasteten Zustand die Kontur der Ringstege (1) im Querschnitt zwei Wölbungen (1a, 1b) zur Rohrwand hin bildet.

2. Manschette nach Anspruch 1, dadurch gekennzeichnet, daß die Ringstege (1) im unbelasteten Zustand einen solchen Abstand voneinander haben, daß sie sich im belasteten Zustand nicht berühren.

3. Manschette nach Anspruch 1 oder 2, dadurch gekennzeichnet, daß auf beiden Seiten der mit Ringstegen (1) mit zwei Wölbungen versehenen Bereiche je ein Ringsteg (2) angeordnet ist, dessen der Rohrwandung zugewandte Fläche im Querschnitt eine Kurve bildet, die eine Gerade (4) oder in etwa eine Gerade ist.

4. Manschette nach Anspruch 3, dadurch gekennzeichnet, daß die Kurve (4) im unbelasteten Zustand der Manschette, ausgehend von ihrem den übrigen Ringstegen (1) zugewandten Ende, schräg von der Rohrwandung weg verläuft (Figur 1).

5. Manschette nach Anspruch 3, dadurch gekennzeichnet, daß die Kurve (4) im unbelasteten Zustand der Manschette, ausgehend von ihrem den übrigen Ringstegen (1) zugewandten Ende, schräg zur Rohrwandung hin verläuft (Figur 2).

6. Manschette nach Anspruch 5, dadurch gekennzeichnet, daß im unbelasteten Zustand der Manschette die Flanken (2a, 2b) der Ringstege (2) parallel und schräg zur Rohrwandung und zu den übrigen Ringstegen (1) hin verlaufen.

7. Manschette nach Anspruch 5 oder 6, dadurch gekennzeichnet, daß die den übrigen Ringstegen (1) zugewandten Flanken (2a) der Ringstege (2) etwa in der Höhe der Kanten des Spannringes angeordnet sind.

8. Manschette nach einem oder mehreren der Ansprüche 1 bis 7, dadurch gekennzeichnet, daß sich die Ringstege (1) mit zwei Wölbungen (1a, 1b) zu ihren Sockelpartien (9) hin konisch verbreitern.

9. Manschette nach einem oder mehreren der Ansprüche 3-8, dadurch gekennzeichnet, daß die äußeren Ringstege (2) im unbelasteten Zustand einen solchen Abstand von den Nachbarstegen (1) haben, daß sich diese (2) und jene (1) im belasteten Zustand nicht berühren.

## Claims

1. Cuff for sealing joints of pipes adhering inside at the two ends of pipes by a plurality of annular ribs (1) formed in one piece with the rest of the cuff, which is made of elastic material and which is pressed outwardly by expanding collars on its inner side in the region of the annular ribs (1), characterized in that in its unloaded state the profile of the annular ribs (1) forms in cross-section two curvatures (1a, 1b) towards the pipe wall.

2. Cuff according to claim 1, characterized in that the annular ribs (1) in the unloaded state have such a distance from each other that they do not touch each other in the loaded state.

3. Cuff according to claim 1 or 2, characterized in that on both sides of the areas provided with annular ribs (1) with two curvatures there is located an annular rib (2) each, the surface orientated towards the pipe wall of which forms a curve in cross-section, which is a straight line (4) or approximately a straight line.

4. Cuff according to claim 3, characterized in that the curve (4) in the unloaded state of the cuff extends in oblique direction from the pipe wall, starting from its end facing the other annular ribs (1) (Fig. 1).

5. Cuff according to claim 3, characterized in that the curve (4) in the unloaded state of the cuff extends in oblique direction towards the pipe wall, starting from its end facing the other annular ribs (1) (Fig. 2).

6. Cuff according to claim 5, characterized in that in the unloaded state of the cuff the flanks (2a, 2b) of the annular ribs (2) extend parallely and obliquely to the pipe wall and towards the other annular ribs (1).

7. Cuff according to claim 5 or 6, characterized in that the flanks (2a) of the annular ribs (2) facing the other annular ribs (1) are located approximately in the area of the edges of the expanding collar.

8. Cuff according to one or a plurality of claims 1 to 7, characterized in that the annular ribs (1) with two curvatures (1a, 1b) broaden conically towards their base parts (9).

9. Cuff according to one or a plurality of claims 3 to 8, characterized in that the outer annular ribs (2) in the unloaded state have such a distance from the adjacent ribs (1) that these (2) and the latter (1) do not touch each other in the loaded state.

## Revendications

1. Manchon permettant d'assurer l'étanchéité des joints de tuyaux et qui s'applique intérieurement sur chacune des deux extrémités de tuyau par plusieurs nervures annulaires (1) formant une seule pièce avec le reste du manchon, ce manchon étant constitué d'un matériau élastique et sa face interne étant soumise, dans la zone des nervures annulaires (1), à une pression vers l'extérieur produite par des bagues de tension, caractérisé en ce que, à l'état hors sollicitation, le contour des nervures annulaires (1) en section transversale forme deux parties bombées (1a, 1b) tournées vers la paroi des tuyaux.

2. Manchon selon la revendication 1, caractérisé en ce que, à l'état hors sollicitation, les nervures annulaires (1) présentent entre elles un espacement tel qu'elles ne viennent pas en contact à l'état sous sollicitation.

3. Manchon selon la revendication 1 ou 2, caractérisé en ce qu'il est prévu, sur chacun des deux côtés de la zone comportant les nervures annulaires (1) à deux parties bombées, une nervure annulaire (2) dont la surface tournée vers la paroi du tuyau forme, en section transversale, une courbe qui est une droite (4) ou sensiblement une droite.

4. Manchon selon la revendication 3, caractérisé en ce que, à l'état hors sollicitation du manchon, la courbe (4) s'étend à partir de son extrémité tournée vers les autres nervures annulaires (1) en s'éloignant de manière inclinée de la paroi des tuyaux (figure 1).

5. Manchon selon la revendication 3, caractérisé en ce que, à l'état hors sollicitation du manchon, la courbe (4) s'étend, à partir de son extrémité tournée vers les autres nervures annulaires (1) en se rapprochant de manière inclinée de la paroi des tuyaux (figure 2).

6. Manchon selon la revendication 5, caractérisé en ce que, à l'état hors sollicitation du manchon, les flancs (2a, 2b) des nervures annulaires extérieures (2) s'étendent parallèlement et de manière inclinée en direction de la paroi des tuyaux et des autres nervures annulaires (1).

7. Manchon selon la revendication 5 ou 6, caractérisé en ce que les flancs (2a) des nervures annulaires extérieures (2) qui sont tournées vers les autres nervures annulaires (1) sont disposés sensiblement à la hauteur des arêtes de la bague de tension.

8. Manchon selon une ou plusieurs des revendications 1 à 7, caractérisé en ce que les nervures annulaires (1) à deux parties bombées (1a, 1b) s'évasent de manière conique en direction de leurs parties de pied (9).

9. Manchon selon une ou plusieurs des revendications 3 à 8, caractérisé en ce que, à l'état hors sollicitation, les nervures annulaires extérieures (2) présentent par rapport aux nervures voisines (1) un espacement tel que les premières (2) et les secondes (1) ne viennent pas en contact à l'état sous sollicitation.

Fig. 1

0 168 452

Fig.2